# NEW EUROPEAN PATENT SPECIFICATION

(11) **EP 0 293 035 B2**
(45) Date of publication and mention of the opposition decision: **19.05.1999**
(45) Mention of the grant of the patent: 18.03.1992
(21) Application number: 88200975.6
(22) Date of filing: 16.05.1988
(51) Int. Cl.: H02B 1/26, H02B 1/46

(54) **A housing made of plastics, and in particular a distribution box for electrical wiring**
Kunststoffgehäuse, insbesondere Verteilerkasten für elektrische Schaltungen
Coffret plastique, et notamment boîte de distribution pour câblage électrique

(30) Priority: 19.05.1987 NL 8701200
(43) Date of publication of application: 30.11.1988
(73) Proprietor: B.V. Kunststoffenindustrie Attema, NL-4203 NN Gorinchem (NL)
(72) Inventor: Romijn, Jan, NL-4254 BH Sleeuwijk (NL)
(74) Representative: Mommaerts, Johan Hendrik, Dipl.-Phys.

(56) References cited:
- DE-C- 3 223 095
- DE-U- 6 911 689
- DE-U- 8 009 715
- DE-U- 8 020 040
- DE-U- 8 127 541

## Description

The invention relates to a wiring distribution box as defined in the preamble of claim 1.

A distribution box of this kind is known from DE-U 80 20 040.

An important draw-back of this known distribution box is that the snap hooks, after being deflected by a tool such as a screw-driver, will return to their latching position after retracting the tool, so that removing the cover will be difficult in the case that more than one hook is provided.

The invention provides an improved distribution box which does not have these disadvantages, which can be quickly opened, but since the opening means are not visible, opening by unauthorised persons is made difficult. This distribution box is defined in claim 1.

Locking snap-connection hooks by means of auxiliary flexible locking elements after deflecting the lock by means of a screwdriver or the like inserted through an aperture is known from DE-C 3 232 095 for interconnecting casing parts or for fixation of elements on a framework. In an embodiment thereof the aperture is situated in the bottom part which is not suitable for the present distribution boxes which are to be fixed on the wall of a building, and, moreover, the snap-connection elements according to this DE-C are situated at a distance from the lateral walls which reduces the inner space, and, furthermore, manufacturing by injection moulding is complicated thereby.

In order to provide as much space as possible for making electric connections, the hood according to the invention is, at least at those sides where the latches are arranged, provided with a projecting wall joining the bottom, on which wall the respective latch part is integrally formed.

The present distribution box is designed for removing draw-backs of current boxes. A first objection is that, after arranging the switches and the like, there is little room left within the bottom with upstanding walls for making the connections. It becomes gradually usual to arrange, in such distribution boxes, in particular standardised rails on which adapted maximum and/or earth leak interruptors can be fixed by means of latches. The advantage thereof is that arranging these interruptors can ce postponed until the very last moment. In the housing industry however, given combinations of such interruptors are rather frequent, so that it is favourable to arrange them on such a rail already in the factory, but building in later such rails provided with interruptors and to be screwed on the bottom of the box is time-consuming, and is often difficult in view of the restricted space within the bottom part of the box. Another objection of the current distribution boxes is that, if the wiring tubes are already present, it is difficult to mount such boxes since the wiring tubes are to be inserted through ports in the box walls.

The subclaims refer to measures which are designed for removing the draw-backs of the current boxes.

The invention will be elucidated below in more detail by reference to a drawing, showing in:
Fig. 1 a simplified exploded representation in perspective of an embodiment of the box according to the invention;
Fig. 2 three partial views at a larger scale of a latch according to the invention for such a box; and
Fig. 3 two views of a tube clip of the box of Fig.1 with a wire tube arranged therein.

The embodiment of a distribution box according to the invention shown in the drawing comprises a hood 1 with two joining closed lateral walls 2, and, at both other sides, said walls being provided with two large recesses 3; said box comprises, moreover, a bottom plate 4 on which the walls 2 of the hood fit by means of alignment ribs not shown.

At the inner side of each lateral wall 2 a resilient latching hook 5 is integrally formed, and on the bottom 4 corresponding latching lugs 6 are integrally formed. Laterally of each lug 6 a resilient latching hook 7 is integrally formed on the bottom 4.

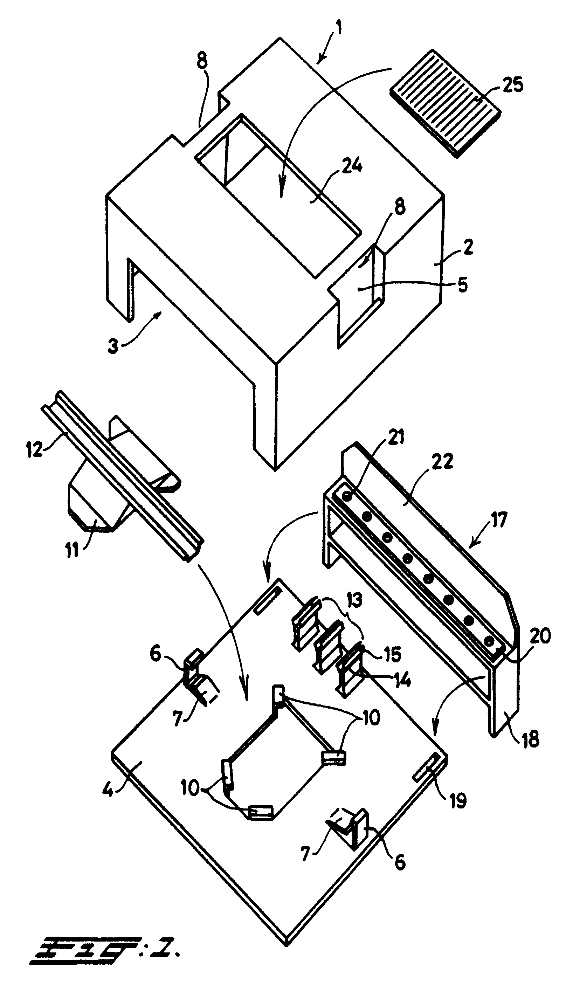

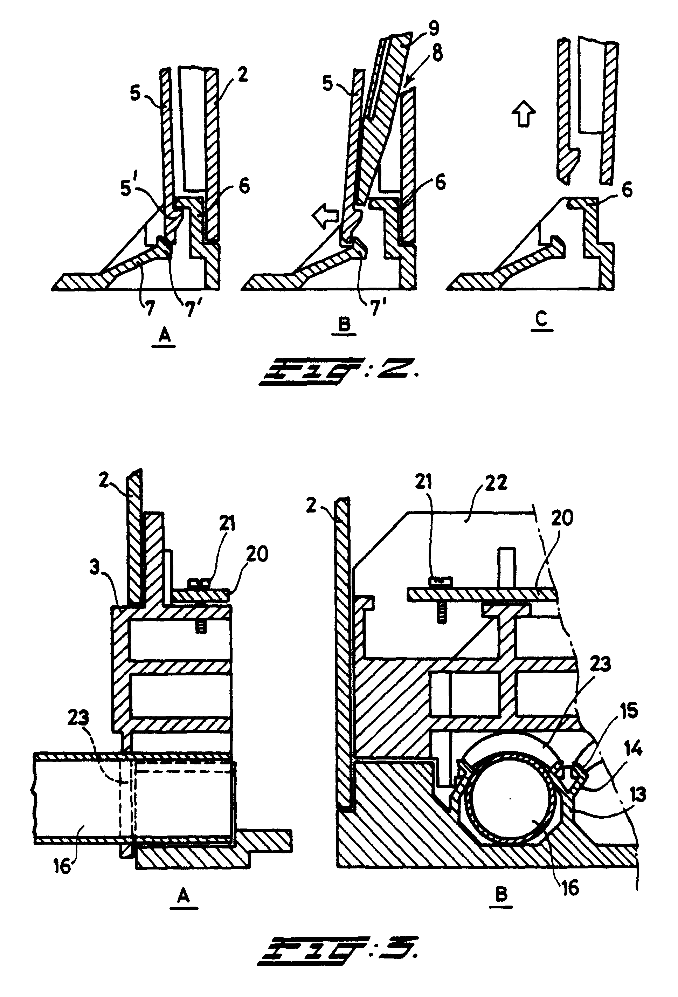

As shown in Fig. 2A the head 5' of the hook 5 is, in the closed condition of the hood 1, engaging the corresponding lug 6. The second hook 7 is, then,situated behind the head 5'. If, now, a screw driver or pin 9 is inserted through an aperture 8 in the hood 1, the hook 5 can be deflected, as shown in Fig. 2B, in order to release its head 5' from the lug 6, and then the hook 7 is slightly deflected and can move upwards again so that its head 7' will engage the head 5' of the hook 5 so as to retain the latter in the unlatched condition. With the same screw driver 9 the or each other latching hook 5 can be released, and then the hook 1 can be removed from the bottom plate 4.

When retracting the hood 1 the heads 5' slide along the corresponding lugs 6, and thereafter the heads 5' leave the heads 7' as shown in Fig. 2C.

When replacing the hood the chamfered heads 5' slide along the lugs 6 and along the chamfered heads 7' of the hooks 7, and thereafter the heads 5' snap behind the lugs 6. The hood 1 is, then, latched again.

It will be clear that the hooks 5 can also be provided on the bottom 4, and the lugs 6 and hoods 7 on the hood 1.

In the centre of the bottom 4 retaining rims 10 are integrally formed into which a foot 11 can be shifted. Said foot carries a rail 12 of the current shape integrally formed thereon, said rail being adapted for supporting maximum and/or ground-leak interrupters. A rail 12 already provided with the required interrupters can be shifted later in a simple manner in the rims 10, and straps, snap locks or, as the case may be, adjusting screws can be used for securing said foot 11.

The rail 12 is kept at a distance from the bottom 4 by said foot 11, so that laterally of the foot 9 space is provided for leading through wiring conductors.

At least at the side of the bottom 4 in front of the recesses 3 of the hood 1 two clips 13 are integrally formed. As clearly appears from Fig.3, each clip 13 comprises two resilient tongues 14 with off-set extremities 15, said tongues having an inward slope. The distance between the adjacent tongues 14 of two adjacent clips 13 is smaller than the diameter of the smallest prevailing wiring tube (16 mm).

If, as shown in Fig. 3B, a tube 16 is inserted between two clips 13, the adjacent tongues 14 are slightly deflected outwards, so that the tube 16 is clamped. If a thicker tube ( e.g. of 19 or 20 mm) is inserted, the tongues 14 will be bent further so that also these tubes will be clamped.

In order to ensure a good anchoring of the tubes 16, after applying all the tubes a bridge 17 is applied on the tubes 16. Lateral portions 18 of said bridge 17 fit in apertures 19 of the bottom 4, and can be fixed by means of screws or the like if necessary.

Also at the other side of the bottom 4 tube clips 13 can be provided, and then the bottom can be shaped completely symmetrically.

At the upper side of the bridge 17 a grounding strip 20 can be applied which is provided with terminal screws or holes 21, by means of which grounding wires provided in the tubes 16 can be connected.

Finally the recesses 3 of the hood walls can be filled with an adapted filling plate or the like which is provided with removable ports, which can be broken away at the location of the inserted tubes. In particular also the bridge 17 can be provided with an upstanding wall 22, serving as a top plate, and which can be provided with removable ports 23 (Fig. 3).

In the hood 1 a window 24 is formed through which the interrupters provided on the rail 12 extend outwards. The space which has not been used is filled by means of a cover plate 25 snapped in said window, said plate being provided with break lines in order to allow to adapt the length of said plate.

## Claims

1. A wiring distribution box made of plastics, comprising a hood part (1) having side walls (2) fitting on a bottom part (4), snap-latch means for releasably fixing said hood part (1) on said bottom part (4), and means (12) for supporting interruptor means on said bottom part (4), each snap-latch means comprising a resilient snap hook (5) on the hood part (1) and a fixed lug (6) on the bottom part (4), which hooks and lugs are integrally formed in the part in question, and are arranged in such a manner that, on placing the hood part (1) on the bottom part (4), these hooks (5) will snap behind the corresponding lugs (6), which hood part (1) is provided with an aperture (8) near each hook (5) adapted for inserting a Idol such as a screw-driver for deflecting the hook (5) in question, so as to allow the hood part (1) to be removed, which hooks (1) extends parallel to the respective side wall (2), **characterised in that**, a second resilient lug (7) is integrally formed on the bottom part (4) in such a position near the fixed lug (6) that, on deflecting the hook (5), the latter will be retained in its deflected position by this second lug (7) until the hood part (1) has been removed sufficiently for bringing the hook (5) outside the reach of the fixed lug (6), each hook (5) being formed as an integral part of a recessed portion of the adjacent side wall (2) of the hood part (1), which recessed portion defines, together with the remaining portion of the side wall (2), the respective aperture (8).

2. The distribution box of claim 1, adapted for introducing wiring tubes therein, **characterised in that** the bottom (4) is provided, at least at one side thereof, with tube clips (13) formed as pairs of resilient plastics tongues (14) projecting from said bottom, the distance between two adjacent tongues (14) of a clip (13) being smaller than the diameter of the smallest prevailing tube (16), said tongues (14) being resilient to such an extent that, when inserting a wiring tube (16) between two tongues (14), said tongues (14) can be deflected in order to clamp the tube (16).

3. The distribution box of claim 1 or 2, **characterised** by a covering bridge (17) to be fixed on the bottom part (4) the lower surface thereof bearing on the tubes (16) inserted in the box.

4. The distribution box of claim 3, **characterised in that** the bridge (17) is provided with a grounding strip (20) or the like with means (21) for connecting grounding wires thereto.

5. The distribution box of any one of claims 1..4, **characterised in that** at the or each side where the tube clips (13) are present, the lateral walls of the hood (1) are provided with an adapted recess into which a filling plate (22) provided with removable ports (23) can be arranged.

6. The distribution box of claim 5, **characterised in that** the filling plate (22) is a portion of the bridge (17).

## Patentansprüche

1. Verteilerkasten aus Kunststoff für Leitungen, mit einem Haubenteil (1) mit auf einem Bodenteil (4) passenden Seitenwänden (2), Schnappriegelmitteln für das lösbar auf dem Bodenteil (4) Festlegen des Haubenteils (1), und Mitteln (4) zur Unterstützung von Schaltermitteln auf dem Bodenteil (4), wobei jedes Schappriegelmittel einen elastischen Schnapphaken (5) am Haubenteil (1) und einen festen Nocken (6) am Bodenteil (4) umfasst, welche Haken und Nocken einstückig am diesbezüglichen Teil angeformt sind, und derart angeordnet sind dass beim Anordnen des Haubenteils (1) auf den Bodenteil (4) diese Haken (5) hinter die entsprechenden Nocken (5) schnappen, welches Haubenteil (1) in der Nähe jedes Hakens (5) mit einer Öffnung (8) zum Einführen eines Werkzeugs wie ein Schraubendreher versehen ist um den diesbezüglichen Haken (5) abzubiegen und das Haubenteil (1) entfernen zu können, welche Haken (1) sich parallel zur diesbezüglichen Seitenwand (2) erstrecken, **dadurch gekennzeichnet**, dass ein zweiter elastischer Nocken (7) an einer derartigen Stelle in der Nähe des festen Nockens (6) angeformt ist, dass beim Abbiegen des Hakens (5) dieser Haken in seiner abgebogenen Lage von einem zweiten Nocken (7) festgehalten wird bis der Haubenteil (1) genügend entfernt worden ist um den Haken (5) ausserhalb des Bereichs des festen Nockens (6) zu bringen, und jeder Haken (5) als einen einstückigen Teil eines zurückweichenden Teils der angrenzenden Seitenwand (2) des Haubenteils (1) geformt ist, welcher zurückweichende Teil zusammen mit dem übrigen Teil der Seitenwand (2) die diesbezügliche Öffnung (8) bestimmt.

2. Verteilerkasten nach Anspruch 1, geeignet zur Einführung darin von Leitungsrohren, **dadurch gekennzeichnet**, dass der Boden (4) wenigstens an einer Seite mit Rohrklammern (13) versehen ist, die als Paare elastischer Kunststoffzungen (14) von dem Boden vorstehen, wobei der Abstand zwischen zwei benachbarten Zungen (14) einer Klammer (13) kleiner ist als der Durchmesser des kleinsten vorkommenden Rohre (16), und wobei die Zungen (14) in einem solchen Ausmass elastisch sind, dass sie beim Einsetzen eines Leitungsrohres (16) zwischen zwei Zungen (14) abgebogen werden um das Rohr (16) festzuklemmen.

3. Verteilerkasten nach Anspruch 1 oder 2, **gekennzeichnet** durch eine Abdeckbrücke (17), die auf die in den kasten eingesetzten Rohre (16) aufgesetzt wird, und die an dem Bodem (4) befestigt werden kann.

4. Verteilerkasten nach Anspruch 3, **dadurch gekennzeichnet,** dass die Brücke mit einem Erdungsstreifen (20) oder dergleichen mit Mitteln (21) zum daran Anschliessen von Erdnungsdrähten versehen ist.

5. Verteilerkasten nach einem der Ansprüche 1..4, **dadurch gekennzeichnet,** dass an der oder jeder Seite, an der sich die Rohrklammern (13) befinden, die Seitenwände des Haubens (1) mit einer geeigneten Aussparung versehen sind, in der eine Füllplatte (22) mit entfernbaren Öffnungen (23) angeordnet werden kann.

6. Verteilerkasten nach Anspruch 5, **dadurch gekennzeichnet,** dass die Füllplatte (22) ein Teil der Brücke (17) ist.

## Revendications

1. Boîtier de distribution de câblage en matière plastique, comprenant un élément de capot (1) ayant des parois latérales (2) s'ajustant à un élément de fond (4), des moyens élastiques de verrouillage servant à relier détachablement cet élément de capot (1) sur cet élément de fond (4) et moyens (12) pour supporter des moyens interrupteur sur cet élément de fond (4), chaque élément de verrouillage comprenant un crochet élastique de verrouillage (5) sur l'élément de capot (1) et un talon fixe (6) sur l'élément de fond (4), ces crochets et talons étant formés intégralement à l'élément en question, et étant arrangés tellement que, lorsque l'élément de capot (1) est placé sur l'élément de fond (4), ces crochets (5) engagent en derrière des talons (6) correspondants, cet élément de capot (1) étant prévu d'une ouverture (8) adaptée pour insérer un outil tel qu'un tournevis pour écarter le crochet (5) en question permettant ainsi d'enlever l'élément de capot (1), ces crochets (1) s'étendant parallèlement à la parois latérale (2) en question, **caractérisé** en ce qu'un deuxième talon élastique (7) est formé intégralement sur l'élément de fond (4) dans une telle position au voisinage du talon fixe (6) que, en écartant le crochet (5) le dernier sera maintenu dans la position écartée par ce second talon (7) jusqu'à l'élément de capot (1) a été enlevé suffisamment pour amener le crochet (5) hors la portée du talon fixe (6), chacun crochet (5) étant formé comme une partie rentrante de la paroi latérale (2) adjacente de l'élément de capot (1), cette partie rentrante déterminant, avec la partie restante de la paroi latérale (2), l'ouverture (8) en question.

2. Boîtier de distribution selon la revendication 1, prévus pour l'introduction de tubes de câblage dans celui-ci, **caractérisé** par le fait que le fond (4) est muni, au moins sur un côté, d'agrafes de tubes (13) formées par des paires de languettes élastiques (14) en matière plastique faisant saillie dudit fond, la distance entre deux languettes adjacentes (14) d'une agrafe (13) étant inférieure au diamètre du plus petit des tubes (16) courantes, lesdites languettes (14) étant tellement flexibles que, lorsqu'un tube (16) de câblage est inséré entre deux languettes (14), celles-ci puissent être écartées pour pincer le tube (16).

3. Boîtier de distribution selon la revendication 1 ou 2, **caractérisé** par un pont de couverture (17) s'ajustant sur les tubes (16) insérés dans le boîtier, ledit pont pouvant être fixé sur le fond (4).

4. Boîtier de distribution selon la revendication 3, **caractérisé** en ce que le pont (17) est prévu d'une bande de mise à la terre (20) ou analogue, avec des moyens (21) pour raccorder à celui des fils de mise à la terre.

5. Boîtier de distribution selon l'une quelconque des revendications 1..4, **caractérisé** en ce que, du côté où se trouvent les agrafes (13), les parois latérales du capot présentant un évidement dans lequel peut s'insérer une plaque de remplissage (22) munie d'opercules amovibles (23).

6. Boîtier de distribution selon la revendication 5, **caractérisé** par le fait que le plaque de remplissage (22) est une partie du pont (17).
